# FASCICULE DE BREVET EUROPEEN

(11) **EP 2 487 107 B1**
(45) Date de publication et mention de la délivrance du brevet: **20.04.2016**
(21) Numéro de dépôt: 12154555.2
(22) Date de dépôt: 08.02.2012
(51) Int. Cl.: B64C 1/06, B64D 13/00

(54) **Procédé et dispositif anti-condensation pour aéronef**
Antikondensierungsverfahren und -vorrichtung für Luftfahrzeug
Anti-condensation method and device for aircraft

(30) Priorité: 09.02.2011 FR 1100398
(43) Date de publication de la demande: 15.08.2012
(73) Titulaire: Liebherr-Aerospace Toulouse SAS, 31200 Toulouse (FR)
(72) Inventeur: Barreau, Laurent, 31240 L'UNION (FR); Eglem, Michel, 31200 TOULOUSE (FR); Heraud, Philippe, 31500 TOULOUSE (FR)
(74) Mandataire: Cabinet BARRE LAFORGUE & associés

(56) Documents cités:
- WO-A1-00/37313
- WO-A1-91/13803
- US-A- 5 897 079
- US-B1- 6 668 917

## Description

L'invention concerne un procédé et un dispositif anti-condensation pour aéronef. L'invention concerne un tel procédé et un tel dispositif anti-condensation adaptés en particulier pour limiter de façon préventive -notamment pour sensiblement empêcher- la formation d'eau liquide par condensation de vapeur d'eau sur une face intérieure -en particulier sur une face intérieure froide- de fuselage d'aéronef. L'invention concerne aussi un tel procédé et un tel dispositif anti-condensation adaptés pour éliminer l'eau liquide formée au contact d'une paroi froide d'un aéronef et susceptible de s'accumuler dans cette zone.

On sait que le fuselage d'un aéronef volant à haute altitude -notamment la surface extérieure dudit fuselage- est exposé à des températures de l'ordre de -40°C à -56°C alors que la température de l'air de la cabine des passagers est maintenue à une valeur optimale de l'ordre de +20°C. En outre, on sait aussi que pour le confort des passagers, l'air de la cabine doit présenter un taux d'humidité supérieur à 10 % -notamment au moins de l'ordre de 20 à 30 %-. Il en résulte que l'humidité de l'air de la cabine a tendance à générer de l'eau liquide par condensation de l'humidité de l'air de cabine au contact de la face interne froide du fuselage de l'aéronef. Cette eau liquide générée par condensation s'accumulant progressivement dans l'aéronef constitue une surcharge variable de l'aéronef au détriment de sa charge utile et de sa consommation en carburant. En outre, l'accumulation d'eau liquide à l'intérieur de l'aéronef est de nature à endommager les équipements de bord de l'aéronef, en particulier en perturbant le fonctionnement des équipements électriques de l'aéronef et en fragilisant les éléments structurels de l'aéronef susceptibles d'être détériorés par corrosion.

On connaît déjà différents dispositifs et procédés de traitement de l'air de cabine d'un aéronef permettant de faire circuler de l'air chaud dans l'espace s'étendant entre les parois externes de la cabine et la face interne du fuselage d'un aéronef. Une telle approche est par exemple connue à partir du document WO91/13803.

Du document WO 00/37313, on connaît également un dispositif de distribution d'air dans la cabine d'un aéronef dans lequel de l'air chaud est prélevé au niveau des moteurs de l'aéronef et mélangé avec de l'air produit par un dispositif de conditionnement d'air. Un tel dispositif comprend un organe de contrôle et d'ajustement de l'humidité de l'air introduit dans la cabine passagers et dans l'espace s'étendant entre la face interne du fuselage et une paroi d'isolation s'étendant en regard de ladite face interne du fuselage.

Une telle solution nécessite le prélèvement d'air sec et chaud au niveau des compresseurs des moteurs de l'avion. Il en résulte une perte de puissance des moteurs. En outre, une telle solution ne permet pas de diminuer la formation d'eau liquide par condensation de la vapeur d'eau de l'air humide au contact de la face intérieure froide du fuselage de l'aéronef.

On connaît aussi (US 5 386 952) un dispositif déshumidificateur de l'air de cabine positionné dans la partie supérieure de l'aéronef et adapté pour convertir un air humide et froid en air chaud sensiblement sec. Un tel dispositif déshumidificateur comprend un matériau -notamment un gel de silice- de piégeage de l'humidité de l'air traversant ledit matériau et un organe de chauffage électrique d'un air de purge.

Un tel dispositif est pesant, de l'ordre de 18,5 kg, et constitue une surcharge de l'aéronef. En outre, un tel dispositif nécessite le remplacement annuel du gel de silice et alourdit les opérations de maintenance de l'aéronef. Un tel dispositif est couteux et exige pour son fonctionnement une consommation électrique importante de l'ordre de 4,5 kW.

L'invention vise à pallier les inconvénients précédemment évoqués en proposant un procédé et un dispositif anti-condensation adapté pour limiter -voire empêcher- la formation, par condensation de l'humidité de l'air, d'eau liquide au contact de la face intérieure de la paroi intérieure du fuselage d'un aéronef, en particulier au contact de la face intérieure de la paroi intérieure du fuselage s'étendant en regard de la paroi supérieure de la cabine passagers -en particulier, mais non exclusivement en condition de vol-.

L'invention vise de façon générale un tel procédé et un tel dispositif anti-condensation adaptés pour diminuer -voire à empêcher totalement- le dépôt d'eau liquide, par condensation de l'humidité de l'air circulant dans l'espace s'étendant entre une paroi de cabine et une paroi de fuselage d'un aéronef, en particulier dans l'espace couronne d'un aéronef.

L'invention vise aussi un tel procédé et un tel dispositif anti-condensation pour l'élimination de l'eau liquide formée par condensation de vapeur d'eau sur les parois froides du fuselage de l'aéronef -notamment lors d'une phase de redémarrage de l'aéronef faisant suite à un arrêt prolongé-.

L'invention vise aussi à proposer un tel procédé et un tel dispositif anti-condensation ne nécessitant pas un prélèvement additionnel d'air chaud au niveau des moteurs dont le fonctionnement n'est pas perturbé et dont la puissance reste entièrement disponible pour l'entrainement de l'aéronef.

L'invention vise aussi un tel procédé et un tel dispositif anti-condensation qui ne nécessitent pas la mise en oeuvre d'un équipement spécifique supplémentaire de déshumidification par captage de l'humidité de l'air de cabine.

En particulier, l'invention vise aussi à proposer un tel procédé et un tel dispositif anti-condensation ne nécessitant pas la mise en oeuvre d'un dispositif de piégeage de l'humidité de l'air dans un gel et qui doit nécessairement être renouvelé lors des opérations de maintenance de l'aéronef.

L'invention vise également à proposer un tel procédé et un tel dispositif anti-condensation qui soient compatibles avec les contraintes de sécurité, de confort et de bien-être des passagers d'un aéronef.

L'invention vise aussi à proposer un tel procédé et un tel dispositif anti-condensation qui soient compatibles avec les contraintes de consommation en carburant des aéronefs et qui n'induisent pas une augmentation significative de la charge utile des aéronefs.

En particulier, l'invention vise aussi un tel procédé et un tel dispositif anti-condensation de consommation énergétique faible et adaptée aux contraintes d'autonomie énergétique d'un aéronef.

L'invention vise aussi à proposer un tel dispositif qui ne nécessite pas de modification structurelle en profondeur des équipements de bord dudit aéronef. En particulier, l'invention vise un tel dispositif qui ne nécessite pas l'installation d'un réseau de tuyauterie pour la distribution d'air dans l'ensemble de l'espace périphérique limité par le fuselage de l'aéronef.

L'invention vise aussi un dispositif anti-condensation qui soit susceptible d'être installé et mis en oeuvre sur tout type d'aéronef, à la construction dudit aéronef ou lors d'opérations de maintenance dudit aéronef et/ou lors d'une modification, réalisée au sein d'un centre spécialisé, de l'aéronef déjà mis en service.

L'invention vise également à atteindre tous ces objectifs à moindre coût, en proposant un procédé et un dispositif anti-condensation de faible coût de revient.

Pour ce faire, l'invention concerne un procédé anti-condensation pour aéronef, ledit aéronef comprenant :
- une cabine adaptée pour pouvoir recevoir des passagers ;
- un fuselage ;
- un espace, dit espace couronne, s'étendant entre une paroi supérieure de la cabine et une paroi du fuselage ;
- un dispositif de conditionnement d'air adapté pour fournir dans la cabine de l'air adapté au maintien de la sécurité et du confort des passagers ;
- le dispositif de conditionnement d'air comprenant au moins un dispositif de refroidissement d'un air à une température comprise entre +10°C et +60°C, ledit dispositif de refroidissement comprenant au moins une entrée d'air et au moins une sortie d'un flux d'air, dit air froid, présentant une température comprise entre -1°C et +5°C :
   caractérisé en ce que :
   ∘ on prélève au moins une partie du flux d'air froid, puis ;
   ∘ on réalise une étape de chauffage de ladite partie du flux d'air froid de façon à former un flux d'air, dit air chaud, à une température comprise entre +10° et +60°C -notamment de l'ordre de +35°C-, puis ;
   ∘ on introduit le flux d'air chaud obtenu dans l'espace couronne de l'aéronef.

Dans tout le texte, les termes d'orientation « supérieur(e), inférieur(e) » s'entendent par référence à la position et à l'orientation de l'aéronef comprenant le dispositif selon l'invention, lorsque ledit aéronef est posé au sol et en configuration de décollage.

L'invention consiste donc à prélever une partie d'un flux d'air froid à une température comprise entre -1°C et +5°C -qui est un air froid et sec, c'est-à-dire d'humidité plus faible que l'humidité de l'air ambiant de cabine de l'aéronef-, de réchauffer cette partie de flux d'air froid de façon à former un flux d'air chaud et sec à une température comprise entre +10°C et +60°C et de diriger ce flux d'air chaud directement vers l'espace couronne de l'aéronef.

Dans un procédé selon l'invention, le flux d'air chaud est acheminé dans l'espace couronne sans aucun mélange préalable avec de l'air -notamment de l'air chaud prélevé au niveau des moteurs éventuellement détendu à la pression atmosphérique- ou de l'air de recirculation qui n'aurait pas été asséché dans le dispositif de conditionnement d'air-.

Dans un procédé selon l'invention, le flux d'air chaud introduit dans l'espace couronne de l'aéronef est notamment adapté pour pouvoir capter l'humidité de l'air occupant l'espace couronne par un processus naturel d'équilibrage des pressions partielles lors du mélange de l'air chaud et sec avec l'air humide de l'espace couronne. Le taux de vapeur d'eau de l'air dans l'espace couronne diminue avec l'apport de l'air sec. En outre, la température de rosée du mélange d'air est abaissée dans l'espace couronne, diminuant -voire empêchant totalement- tout phénomène de condensation qui serait susceptible de se produire au contact d'une paroi froide de l'aéronef.

On introduit ce flux d'air chaud et sec dans l'espace couronne et directement en regard d'au moins une portion de face intérieure du fuselage de façon à empêcher la condensation de l'air de cabine chaud et humide au contact de chaque portion de face intérieure du fuselage de l'espace couronne dudit aéronef.

Dans un procédé anti-condensation selon l'invention :
- on prélève une partie d'un flux d'air froid produit dans un dispositif de refroidissement de l'air de cabine de l'aéronef, puis ;
- on réchauffe cette partie de flux d'air froid de façon à former un flux d'air, dit air chaud, à une température comprise entre +10° et +60°C -notamment de l'ordre de +35°C-, sans aucun mélange de cette partie de flux d'air froid avec de l'air de l'aéronef, puis ;
- on introduit le flux d'air chaud dans l'espace couronne de l'aéronef de façon à former une couche dynamique d'air chaud et sec au contact de la face intérieure de la paroi du fuselage.

Les inventeurs ont en fait observé que l'introduction d'un flux d'air chaud et sec dans l'espace couronne d'un aéronef-notamment d'un aéronef en condition de vol- permet avantageusement d'assécher ledit espace couronne. L'espace couronne est un espace peu ventilé et dans lequel l'air n'est que peu renouvelé. En outre, la température dans l'espace couronne -notamment en conditions de vol- est plus basse que dans l'espace, dit espace périphérique, s'étendant entre la paroi intérieure du fuselage et les parois latérales de la cabine et en regard de celles-ci. L'espace couronne est donc plus propice à la formation d'eau liquide par condensation de vapeur d'eau à partir de l'air de cabine chargé d'humidité -par la respiration des passagers- et s'écoulant par diffusion à travers la paroi supérieure de la cabine.

Il n'est pas exclu que le flux d'air chaud et sec introduit dans l'espace couronne tout en évitant la formation -par condensation- d'eau liquide sur la paroi intérieure froide du fuselage s'écoule aussi par diffusion dans l'espace périphérique s'étendant au-delà de l'espace couronne en regard de la paroi intérieure du fuselage. Le flux d'air chaud et sec introduit dans l'espace périphérique est de nature à contribuer également à l'assèchement de l'espace périphérique et à s'opposer à la formation d'eau de condensation sur les parois intérieures froides du fuselage de l'aéronef.

Il est à noter que dans un dispositif de conditionnement d'air connu de l'homme du métier, l'air produit par le dispositif de conditionnement d'air à une température adaptée pour permettre son introduction dans la cabine passagers résulte du mélange d'air issu du dispositif de refroidissement et d'air de recirculation provenant de la cabine et qui est donc un air humide.

Avantageusement, dans un procédé selon l'invention on prélève une partie de flux d'air froid en amont d'un organe de mélange (dit chambre de mélange ou « Mixing unit ») et préalablement à tout mélange de cette partie de flux d'air froid avec un air chaud et humide -notamment avec un air chaud d'humidité relative supérieure à l'humidité relative de l'air de la partie du flux d'air froid-, on réchauffe cette partie du flux d'air froid sans aucun mélange de cet air froid avec de l'air chaud de l'aéronef et on dirige cet air froid réchauffé vers l'espace couronne de l'aéronef et on délivre cet air réchauffé et sec au contact de la face intérieure -notamment froide- de la paroi du fuselage de l'aéronef dans l'espace couronne.

En dirigeant une partie du flux d'air froid puis réchauffé de façon que l'air chaud et sec ainsi obtenu circule au contact de la face intérieure de la paroi du fuselage, on forme au contact de cette face intérieure de la paroi du fuselage, une couche d'air plus sec que l'air de cabine, qui ne forme pas d'eau liquide de condensation sur la face intérieure froide de la paroi du fuselage et qui empêche cette formation. Dans un tel procédé anti-condensation, il n'est donc pas nécessaire de mettre en oeuvre un organe spécifique de capture et d'élimination de l'eau liquide provenant de la condensation de la vapeur d'eau.

Un tel procédé anti-condensation selon l'invention permet d'une part d'éviter le contact entre l'air humide de cabine et ladite face intérieure froide de la paroi du fuselage, et d'autre part d'empêcher la condensation d'eau liquide au contact de la face intérieure froide de la paroi du fuselage.

Dans un tel procédé anti-condensation selon l'invention, on limite -voire on empêche- tout contact entre de l'air humide émanant de la cabine et la face intérieure froide -notamment en conditions de vol- de la paroi du fuselage de l'espace couronne de l'aéronef.

Un dispositif de refroidissement de l'air d'un aéronef est un élément constitutif du dispositif de conditionnement de l'air de cabine d'un aéronef (dit ECS, « Environmental Control System »). En général, un tel dispositif de conditionnement comprend une pluralité de dispositifs de refroidissement -notamment deux dispositifs de refroidissement-, et une pluralité de conduits de sortie, chaque dispositif de refroidissement étant adapté pour produire un flux d'air froid dans un conduit de sortie du flux d'air froid s'étendant entre chaque dispositif de refroidissement et l'organe de mélange du flux d'air froid avec au moins un flux d'air distinct du flux d'air froid, notamment avec un flux d'air de recirculation à une température comprise entre +20°C et +30°C. Dans un tel dispositif de conditionnement d'air d'un aéronef, l'air froid produit par le dispositif de refroidissement d'air est mélangé avec de l'air chaud issu des moteurs et éventuellement de l'air de recirculation issu de la cabine pour former l'air conditionné distribué dans la cabine de l'aéronef.

Dans une première variante d'un procédé anti-condensation selon l'invention on prélève -lorsque l'aéronef est en condition « de vol », notamment à haute altitude- une partie du flux d'air froid à une température comprise entre -1°C et +5°C produite par le(s) dispositifs(s) de refroidissement de l'air de l'aéronef et circulant dans un conduit de sortie s'étendant entre le dispositif de refroidissement et une chambre de mélange (« Mixing unit ») de l'aéronef. Dans ces conditions, l'air refroidi par le(s) dispositit(s) de refroidissement et circulant dans le conduit de sortie présente un taux de vapeur d'eau inférieur à 2 g de vapeur d'eau par kilogramme d'air (2 g/kg) -notamment sensiblement de l'ordre de 1 g/kg-et un taux d'eau liquide sensiblement nul.

Le terme « taux de vapeur d'eau » d'une composition gazeuse désigne le rapport de la masse de vapeur d'eau (en g) sur la masse (en kg) d'air sec de ladite composition gazeuse et le terme « taux d'eau liquide » d'une composition gazeuse désigne le rapport de la masse de l'eau liquide (en g) sous forme de gouttelettes en suspension dans la composition gazeuse sur la masse (en kg) d'air sec de ladite composition gazeuse.

On détermine le taux de vapeur d'eau du flux d'air froid par des moyens connus en eux-mêmes de l'homme du métier. En particulier, on mesure le taux de vapeur d'eau au moyen d'un psychromètre de précision comprenant un capteur de température de l'air humide et un capteur de température d'un air sec de référence. La différence de température mesurée entre le capteur de température d'air humide et le capteur de température d'un air sec de référence -dite différence psychrométrique- permet d'évaluer le taux de vapeur d'eau de l'air humide. Il est aussi possible de mesurer le taux de vapeur d'eau de l'air par une mesure capacitive ou encore par une mesure hygrométrique de l'humidité de l'air.

Le taux d'eau liquide de l'air du flux d'air froid correspond à la quantité d'eau liquide contenue dans l'air du flux d'air froid pour une pression partielle de vapeur d'eau supérieure à la pression de saturation à la température de l'air refroidi.

Dans un procédé anti-condensation selon l'invention mis en oeuvre lorsque l'aéronef est en condition « de vol » -notamment à haute altitude-, on met le(s) conduit(s) de sortie en communication de fluide avec au moins un conduit d'introduction de ladite partie du flux d'air froid dans l'espace périphérique de l'aéronef. Avantageusement, on réchauffe ladite partie de flux d'air froid préalablement à son introduction dans l'espace périphérique de l'aéronef et sans mélange de ladite partie de flux d'air froid avec de l'air de l'aéronef, notamment avec de l'air de l'aéronef présentant un taux de vapeur et/ou un taux d'eau liquide plus élevé que le taux de vapeur et/ou un taux d'eau liquide de ladite partie de flux d'air froid.

Dans un procédé anti-condensation selon l'invention mis en oeuvre lorsque l'aéronef est en condition « au sol » -c'est-à-dire lorsque l'aéronef est au sol en phase d'embarquement ou de débarquement ou de maintenance, ou en phase de décollage, ou en phase d'atterrissage-, le flux d'air froid est un flux d'air présentant :
- un taux de vapeur d'eau inférieur à 3,5 g/kg, en particulier sensiblement de l'ordre de 3 g/kg, et ;
- un taux d'eau liquide inférieur à 6,5 g/kg, notamment sensiblement de l'ordre de 6 g/kg.

Dans un procédé anti-condensation selon l'invention, on prélève une partie de flux d'air froid et sec, on réchauffe cette partie de flux d'air froid et on utilise cet air chaud et sec pour le traitement anti-condensation de la face intérieure de la paroi du fuselage de l'espace couronne de l'aéronef. On n'utilise aucun dispositif d'assèchement -notamment comprenant un matériau de piégeage de l'humidité de l'air, en particulier un gel de silice- d'un air chaud et humide. Dans un procédé anti-condensation selon l'invention, on n'utilise aucun dispositif d'extraction de vapeur d'eau d'un air chaud et humide. En particulier, on n'utilise pas de dispositif déshumidificateur tel que décrit dans US 5 386 952.

Avantageusement, dans un procédé anti-condensation selon l'invention mis en oeuvre lorsque l'aéronef est en condition « au sol », on réalise une étape d'extraction de l'eau liquide -notamment dispersée sous la forme de gouttelettes d'eau- de la partie du flux d'air froid, ladite étape d'extraction étant adaptée pour retenir l'eau liquide de la partie du flux d'air froid et pour délivrer un flux d'air froid sensiblement exempt d'eau liquide. On réalise en particulier une telle étape d'extraction d'eau liquide au moyen d'un dispositif adapté pour diminuer le débit de la partie de flux d'air froid et permettre la coalescence des gouttelettes d'eau et leur séparation du flux d'air froid.

Avantageusement et selon l'invention, on réalise l'étape de chauffage de ladite partie de flux d'air froid en utilisant un organe de chauffage choisi dans le groupe formé des organes de chauffage à résistance électrique, des organes de chauffage par échange thermique -notamment des organes de chauffage par échange thermique avec une source d'air chaud du dispositif de conditionnement d'air.

Avantageusement et selon l'invention, pour réaliser ladite étape de chauffage, on utilise des moyens de chauffage de ladite partie de flux d'air froid par échange thermique à partir d'au moins une source de chaleur de l'aéronef.

Avantageusement et selon l'invention, on choisit la(les) source(s) de chaleur de l'aéronef dans le groupe formé des échangeurs thermiques primaires en zone non pressurisée, des échangeurs thermiques secondaires, des lignes de recirculation en zone pressurisée, des lignes d'extraction avionique et des parties chaudes des boucles liquides de l'aéronef.

Avantageusement, dans un procédé anti-condensation selon l'invention, lors de l'étape de chauffage, on augmente la température de la partie du flux d'air froid jusqu'à une température comprise entre +10°C et +60°C -notamment de l'ordre de +35°C-.

Avantageusement, dans un procédé selon l'invention, on réchauffe ladite partie du flux d'air froid au moyen d'un dispositif de chauffage adapté pour pouvoir chauffer et augmenter la température du flux d'air froid et former un flux d'air chaud présentant un taux de vapeur d'eau inférieur à 3 g/kg et une température comprise entre +10°C et +60°C.

Les inventeurs ont aussi constaté qu'il est avantageux de former au contact de la face intérieure de la paroi du fuselage de l'espace couronne d'un aéronef, en particulier d'un aéronef en condition « de vol » à haute altitude, une couche d'air chaud -notamment présentant un taux de vapeur d'eau inférieur à 2 g/kg et un taux d'eau liquide sensiblement nul-.

Le flux d'air chaud est refroidi au contact de la face intérieure froide de la paroi du fuselage et reste sensiblement sec au contact de ladite paroi froide. Il peut être ensuite introduit, en mélange avec de l'air humide (présentant un taux de vapeur d'eau de l'ordre de 2,6 g/kg), dans la cabine passagers sans toutefois entrainer de malaise des passagers en réponse à l'utilisation d'un air trop sec. Le taux de vapeur d'eau de la partie du flux d'air réintroduit dans la cabine passagers est compris entre 1 g/kg et 2,6 g/kg.

En condition « au sol », la partie du flux d'air froid présente un taux de vapeur d'eau de l'ordre de 3 g/kg d'air et un taux d'eau liquide compris entre 3 g/kg et 6 g/kg. L'échauffement de la partie du flux d'air froid au moyen de l'organe de chauffage fournit un flux d'air chaud dont la température est de l'ordre de +35°C et dont le taux de vapeur d'eau de l'ordre de 6 à 9 g/kg d'air et un taux d'eau liquide sensiblement nul. Le taux de vapeur d'eau de la partie du flux d'air chaud réintroduit dans la cabine passagers -en mélange avec de l'air humide (présentant un taux de vapeur d'eau de l'ordre de 12,5 g/kg)- est, dans ces conditions, compris entre 6 g/kg et 12,5 g/kg.

Avantageusement et selon l'invention on adapte le débit de la partie du flux d'air chaud dans le conduit d'introduction de ladite partie du flux d'air chaud dans l'espace couronne de l'aéronef. En particulier, dans un tel procédé anti-condensation selon l'invention, on adapte le débit de la partie du flux d'air chaud de façon à maintenir une couche d'air chaud au contact de la face intérieure froide de la paroi du fuselage dans l'espace couronne de l'aéronef. Avantageusement le flux d'air chaud est un flux d'air chaud et sec.

Avantageusement, dans un procédé anti-condensation selon l'invention, lors de l'étape de chauffage, on augmente la température de la partie du flux d'air froid jusqu'à une température adaptée pour pouvoir former un air de cabine de température et de taux d'humidité adaptés au bien-être des passagers.

L'invention concerne aussi un dispositif anti-condensation pour aéronef, comprenant :
- une cabine adaptée pour pouvoir recevoir des passagers ;
- un fuselage ;
- un espace, dit espace couronne, s'étendant entre une paroi supérieure de la cabine et une paroi du fuselage ;
- un dispositif de conditionnement d'air adapté pour fournir, dans la cabine dudit aéronef, de l'air adapté au maintien de la sécurité et du confort des passagers ;
- le dispositif de conditionnement d'air comprenant au moins un dispositif de refroidissement d'un air à une température comprise entre +10°C et +60°C, ledit dispositif de refroidissement comprenant au moins une entrée d'air à une température comprise entre +10°C et +60°C et au moins une sortie d'un flux d'air, dit air froid, présentant une température comprise entre -1°C et +5°C ;
caractérisé en ce que le dispositif anti-condensation comprend un dispositif de chauffage d'une partie du flux d'air froid, ledit dispositif de chauffage s'étendant sur au moins un conduit d'introduction de la partie de flux d'air froid dans l'espace couronne pour délivrer un flux d'air chaud dans l'espace couronne de l'aéronef.

Avantageusement et selon l'invention, le dispositif anti-condensation comprend au moins un dispositif de chauffage adapté pour pouvoir chauffer et augmenter la température de la partie de flux d'air froid et former un flux d'air chaud.

Un tel dispositif anti-condensation est conformé pour délivrer un flux d'air chaud, directement dans l'espace couronne de l'aéronef, c'est-à-dire sans mélange de ladite partie du flux d'air sec et chaud avec de l'air d'humidité relative supérieure à l'humidité relative de l'air dudit flux d'air sec et chaud préalablement à son introduction dans l'espace couronne de l'aéronef.

Le dispositif anti-condensation comprend un organe d'extraction d'eau liquide adapté pour retenir l'eau liquide de la partie du flux d'air froid et pour délivrer cette partie du flux d'air froid sensiblement exempte d'eau liquide dans le conduit d'introduction de la partie de flux d'air froid dans l'espace couronne. Un tel organe d'extraction d'eau liquide est connu de l'homme du métier. Il peut avantageusement s'agir d'un dispositif à grille adapté pour permettre la coalescence de gouttelettes d'eau liquide de la partie du flux d'air froid et le piégeage desdites gouttelettes coalescées.

Un tel dispositif comprenant un organe d'extraction d'eau liquide est particulièrement adapté pour le fonctionnement de l'aéronef lorsque celui-ci est au sol. Il permet en particulier en condition « au sol » de diminuer le taux d'eau liquide de la partie du flux d'air froid produit par les dispositifs de refroidissement. A titre d'exemple non limitatif, un tel organe d'extraction d'eau est adapté pour permettre la formation d'un flux d'air présentant un taux de vapeur d'eau de 3 g/kg et un taux d'eau liquide de 3 g/kg à partir d'un flux d'air froid présentant un taux de vapeur d'eau de 3 g/kg et un taux d'eau liquide de 6 g/kg.

Avantageusement et selon l'invention, le dispositif anti-condensation comprend au moins un dispositif de chauffage de ladite partie du flux d'air froid s'étendant sur chaque conduit d'introduction de la partie du flux d'air froid dans l'espace couronne et adapté pour pouvoir chauffer et augmenter la température de ladite partie de flux d'air froid et former un flux d'air chaud. En particulier, un tel dispositif de chauffage est adapté pour permettre le chauffage du flux d'air froid et l'augmentation de sa température sans toutefois augmenter le taux de vapeur d'eau. Le flux d'air chaud présente donc un taux de vapeur d'eau inférieur à 1 g/kg lorsque l'aéronef est en condition « de vol », et un taux de vapeur d'eau inférieur à 3 g/kg lorsque l'aéronef est au sol.

Avantageusement, le dispositif de chauffage est adapté pour permettre une augmentation de la température de la partie du flux d'air froid jusqu'à une température comprise entre +10°C et +60°C -notamment de l'ordre de +35°C-.

Un tel dispositif de chauffage est configuré de façon à s'étendre en aval du dispositif de refroidissement d'air et sur le conduit d'introduction de la partie de flux d'air froid dans l'espace couronne. Ainsi, ladite partie du flux d'air froid est chauffée puis dirigée vers l'espace couronne de l'aéronef sans être mélangé avec une quantité d'air présentant un taux d'humidité supérieur.

Avantageusement et en variante selon l'invention, le dispositif de chauffage de la partie du flux d'air froid comprend un organe de chauffage par résistance électrique.

Avantageusement, l'organe de chauffage par résistance électrique présente une consommation comprise entre 1,5 kW et 4,0 kW. En particulier un tel organe de chauffage par résistance électrique est adapté pour augmenter la température du flux d'air sec d'une valeur de température comprise entre -1°C et +5°C jusqu'à une température comprise entre +30°C et +40°C -notamment de l'ordre de +35°C- avant son introduction dans l'espace couronne de l'aéronef.

Avantageusement et selon l'invention, le dispositif de chauffage de la partie du flux d'air froid comprend un organe de chauffage par échange thermique. Avantageusement, l'organe de chauffage par échange thermique est adapté pour permettre un échange de chaleur entre la partie du flux d'air froid -qui est réchauffé au niveau dudit organe de chauffage par échange thermique- et un air de recirculation, en particulier de l'air de cabine à une température comprise entre +20°C et +30°C -notamment de l'ordre de +24°C- qui est refroidi dans l'organe de chauffage par échange thermique. Avantageusement, un tel organe de chauffage par échange thermique ne permet pas d'échange de vapeur d'eau entre la partie du flux d'air froid et l'air de recirculation.

Avantageusement, le dispositif de chauffage de la partie du flux d'air froid est formé d'un organe de chauffage par échange thermique adapté pour augmenter la température de la partie du flux d'air froid à partir d'air chaud produit par le dispositif de refroidissement. Ainsi, au moins une partie de l'énergie thermique dissipée par le dispositif de refroidissement d'air de l'aéronef est récupérée et utilisée pour permettre le chauffage de la partie du flux d'air froid. Au moins une partie de l'énergie thermique nécessaire au réchauffement du flux d'air froid est récupérée à partir d'une source de chaleur non valorisée jusqu'au jour de l'invention.

Avantageusement, le dispositif anti-condensation selon l'invention comprend en combinaison un organe de chauffage à résistance électrique et un organe de chauffage par échange thermique. Dans cette variante d'un dispositif selon l'invention, l'organe de chauffage à résistance électrique et l'organe de chauffage par échange thermique coopèrent pour former la partie du flux d'air chaud à une température comprise entre +20°C et +40°C. Dans cette variante d'un dispositif selon l'invention, la partie du flux d'air froid traverse d'abord l'organe de chauffage par échange thermique de façon à augmenter sa température jusqu'à une valeur comprise entre +20°C et +25°C, puis l'organe de chauffage à résistance électrique qui permet de former un flux d'air chaud à une température comprise entre +30°C et +40°C -notamment de l'ordre de +35°C-. La consommation électrique de l'organe de chauffage à résistance électrique est alors de l'ordre de 1 kW.

Avantageusement et selon l'invention, chaque conduit d'introduction de la partie du flux d'air froid dans l'espace couronne comprend un organe de régulation de débit de la partie du flux d'air froid dans chaque conduit d'introduction. Un tel organe de régulation de débit de la partie du flux d'air froid positionné sur chaque conduit d'introduction est adapté pour permettre notamment mais non exclusivement un ajustement du débit de la partie du flux d'air froid lors d'une phase de transition entre une condition « de vol » et une condition « au sol » de l'aéronef.

Avantageusement, on adapte le débit de la partie de flux d'air froid et sec de façon à adapter le débit du flux d'air froid et le débit du flux d'air chaud en fonction de l'humidité de l'air de l'espace couronne. Ainsi, on optimise la consommation d'air froid en fonction de l'humidité de l'air de l'espace couronne.

Avantageusement et selon l'invention, l'organe de régulation de débit de la partie du flux d'air froid dans chaque conduit d'introduction dans l'espace couronne est un organe automatisé.

Avantageusement et selon l'invention, le conduit d'introduction de la partie du flux d'air froid comprend une partie, dite partie terminale, s'étendant dans l'espace couronne de l'aéronef et adapté pour délivrer la partie du flux d'air froid en regard et à proximité de la face intérieure de la paroi du fuselage dans l'espace couronne de l'aéronef.

Avantageusement, le flux d'air froid présente dans chaque conduit d'introduction une valeur de débit comprise entre 20 g/s et 100 g/s.

Avantageusement et selon l'invention, la partie terminale de chaque conduit d'introduction du flux d'air chaud dans l'espace couronne est formée d'un organe ouvert de distribution du flux d'air chaud en regard et à proximité de la face intérieure de la paroi du fuselage de l'aéronef. Un tel organe ouvert, dit piccolo, de distribution peut être formé d'une canalisation présentant des orifices espacés selon la direction longitudinale de ladite canalisation et débouchant en regard de la face intérieure de la paroi du fuselage et adapté pour permettre une distribution du flux d'air chaud dans l'espace couronne en direction de ladite face intérieure de la paroi du fuselage.

En variante, la partie terminale est formée d'un organe de distribution du flux d'air chaud formé d'un matériau perméable -notamment poreux- au flux d'air chaud.

Avantageusement, le dispositif anti-condensation comprend au moins un thermomètre de mesure de la température de la partie du flux d'air chaud dans chaque conduit d'introduction de la partie du flux d'air chaud dans l'espace couronne de l'aéronef.

Avantageusement, le dispositif anti-condensation comprend au moins un organe de mesure du débit de la partie du flux d'air chaud dans chaque conduit d'introduction de la partie du flux d'air chaud dans l'espace couronne de l'aéronef.

Avantageusement, le dispositif anti-condensation comprend au moins une unité de commande adaptée pour :
- contrôler chaque organe de régulation de débit de la partie du flux d'air froid et pour permettre un ajustement du débit de la partie du flux d'air froid, et pour ;
- contrôler le dispositif de chauffage et permettre un ajustement de la température de la partie du flux d'air froid.

L'invention vise aussi un tel procédé anti-condensation de prévention de la condensation de l'air de cabine d'un aéronef dans lequel on met en oeuvre un dispositif anti-condensation selon l'invention.

L'invention vise aussi l'utilisation d'un tel dispositif anti-condensation selon l'invention pour l'élimination de l'humidité de l'espace couronne d'un aéronef et sa déshumidification.

L'invention vise aussi un aéronef équipé d'un dispositif anti-condensation selon l'invention.

L'invention concerne également un procédé anti-condensation d'un aéronef, un dispositif anti-condensation et l'utilisation d'un tel dispositif anti-condensation caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une vue générale avec arraché d'un fuselage d'aéronef comprenant un dispositif anti-condensation selon l'invention,
- la figure 2 est une vue schématique d'une première variante d'un dispositif selon l'invention,
- la figure 3 est une vue schématique d'une deuxième variante d'un dispositif selon l'invention.

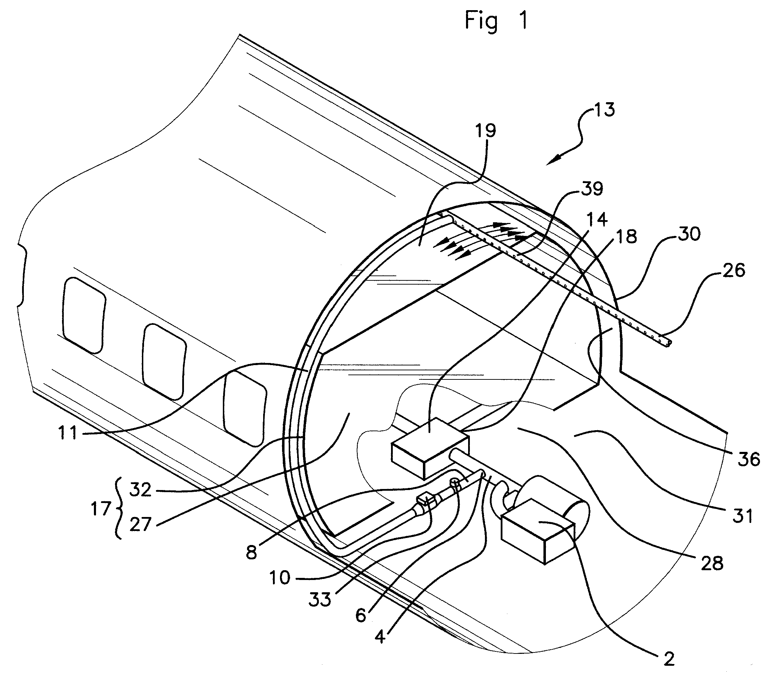

Dans un but de clarté, les dimensions du dispositif 1 anti-condensation représenté en figure 1 ne sont pas représentatives des dimensions d'un tel dispositif en place dans un aéronef 13. Un aéronef 13 équipé d'un dispositif 1 anti-condensation selon l'invention est représenté en figure 1 et comprend un fuselage 30 délimitant un espace 31 intérieur contenant l'air de l'aéronef 13. Un tel aéronef 13 comprend en outre une cabine, dite cabine 17 passager, délimitée par une cloison 32 de séparation entre un espace, dit espace 27 cabine, adapté pour pouvoir accueillir les passagers et un espace 19 couronne (« Crown ») s'étendant entre une partie supérieure de ladite cloison 32 et une face intérieure 36 du fuselage 30.

Un dispositif 1 anti-condensation représenté schématiquement en figure 1 tel que positionné dans un aéronef 13 comprend un dispositif 2 de refroidissement (« Environmental Control System », ECS) s'étendant dans un espace 28 technique inférieur de l'aéronef 13. Un tel dispositif 1 anti-condensation selon l'invention comprend un conduit 4 de sortie d'un flux d'air sec et froid produit par le dispositif 2 de refroidissement d'air, ledit conduit 4 de sortie du flux d'air sec et froid étant en communication de fluide avec un organe 14 de mélange dudit flux d'air sec et froid avec un flux d'air, dit air de recirculation, de la cabine 17.

Un dispositif 1 anti-condensation d'un aéronef selon l'invention comprend un organe 6 de prélèvement d'une partie du flux d'air sec et froid s'écoulant dans le conduit 4 de sortie du flux d'air sec et froid adapté pour permettre un prélèvement de ladite partie du flux d'air sec et froid et pour orienter ladite partie du flux d'air sec et froid dans un conduit 8, 9 d'introduction de ladite partie de flux d'air sec et froid dans l'espace 19 couronne de l'aéronef 13 *via* le réseau 11 d'acheminement. Le conduit 8, 9 d'introduction de ladite partie du flux d'air sec et froid présente, optionnellement, un organe 33 de régulation du débit de ladite partie de flux. Un tel organe 33 de régulation est en particulier adapté pour permettre le contrôle du débit de ladite partie du flux d'air sec et froid et pour adapter ce débit d'air sec et froid aux conditions d'utilisation (vol/stationnement au sol/décollage/atterrissage) de l'aéronef 13.

Il est à noter que pour des raisons de simplification de la figure 1, le dispositif 1 anti-condensation comporte un dispositif 2 de refroidissement d'air unique, un conduit 4 de sortie unique, un organe 6 de prélèvement unique et un conduit 8, 9 d'introduction unique. En réalité, il est possible qu'un tel dispositif 1 anti-condensation de l'aéronef 13 présente une pluralité de dispositifs 2, 3 de refroidissement -notamment deux dispositifs 2, 3 de refroidissement répartis sensiblement symétriquement de part et d'autre du plan de symétrie axiale de l'aéronef 13-. Le dispositif 1 anti-condensation comprend alors, en aval de chaque dispositif 2 de refroidissement d'air, un conduit 4, 5 de sortie, un organe 6, 7 de prélèvement et un conduit 8, 9 d'introduction de la partie de flux d'air sec et froid dans l'espace couronne. Les deux organes 6, 7 de prélèvement confluent alors au niveau du té 29 de confluence et débouchent dans le réseau 11 d'acheminement de la partie de flux d'air sec et froid dans l'espace 19 couronne de l'aéronef 13.

Un dispositif 1 anti-condensation d'un aéronef 13 représenté en figure 1 comprend un dispositif 10 de chauffage s'étendant en amont de l'organe 6 de prélèvement. Dans la variante représentée en figure 1, le dispositif 10 de chauffage s'étend en aval d'un organe 33 de régulation de débit de la partie du flux d'air sec et froid circulant dans le conduit 8, 9 d'introduction. Un tel dispositif 10 de chauffage est adapté pour permettre le chauffage de l'air de la partie du flux d'air sec et froid et pour augmenter sa température jusqu'à une valeur comprise entre +10°C et +60°C. La partie du flux d'air sec et froid s'écoule ensuite dans un réseau 11 d'acheminement de la partie du flux d'air sec et froid dans l'espace 19 couronne de l'aéronef 13. Un tel réseau 11 d'acheminement est formé d'un tronçon unique ou d'une pluralité de tronçons formant un conduit étanche aux gaz. La partie 39 terminale du réseau 11 d'acheminement est formée d'un piccolo 26 adapté pour permettre une distribution de la partie du flux d'air sec et froid dans l'espace 19 couronne de l'aéronef 13.

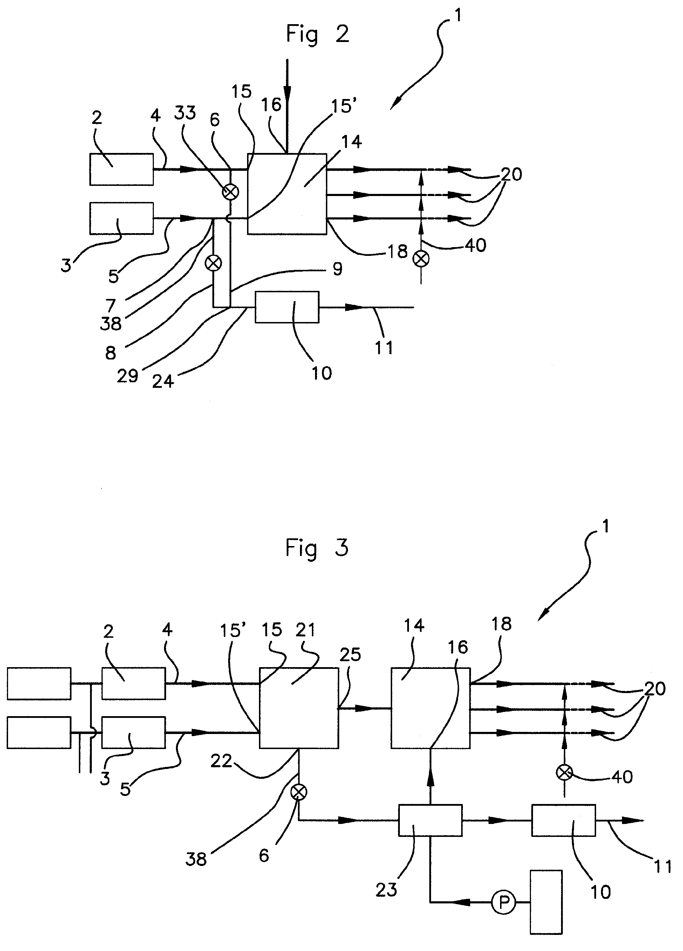

Un dispositif 1 anti-condensation d'un aéronef 13 selon l'invention représenté schématiquement en figure 2 comprend deux dispositif(s) 2, 3 de refroidissement d'air adaptés pour générer chacun dans un conduit 4, 5 de sortie, un flux d'air sec et à basse température, en particulier comprise entre -3°C et +3°C, de préférence de l'ordre de -0,1°C en condition « de vol » et de -2,5°C en condition « au sol ». Le flux d'air produit par chacun des dispositifs 2, 3 de refroidissement d'air utilisés en condition « de vol » (basse température extérieure) est un air sec et froid.

Le dispositif 1 anti-condensation d'un aéronef 13 représenté en figure 2 comprend aussi deux organes 6, 7 de prélèvement d'air, conformés de façon à permettre un prélèvement d'au moins une partie de l'air produit par chacun des dispositifs(s) 2, 3 de refroidissement et pour mettre chacun des dispositif(s) 2, 3 de refroidissement en communication de fluide avec un conduit 8, 9 d'introduction de ladite partie du flux d'air sec et froid dans l'espace 19 couronne (« Crown ») de l'aéronef 13 *via* le réseau 11 d'acheminement. Dans le dispositif représenté schématiquement en figure 2, chaque conduit 8, 9 d'introduction de ladite partie du flux d'air sec et froid dans l'espace 19 couronne présente un organe 33, 34 de régulation du débit de la partie du flux d'air sec et froid. Chaque conduit 8, 9 d'introduction est configuré pour converger au niveau d'un té 29 de confluence et pour former un tronc 24 commun de distribution de la partie du flux d'air sec et froid et sec dans le réseau 11 d'acheminement. Le tronc 24 commun de distribution comprend un dispositif 10 de chauffage de la partie du flux d'air sec et froid produit par chacun des dispositif(s) 2,3 de refroidissement d'air. En variante non représentée, il est possible que le dispositif 1 anti-condensation d'un aéronef 13 comprennent une pluralité de dispositifs 10 de chauffage -notamment deux dispositifs 10 de chauffage- s'étendant chacun sur et au contact d'un conduit 8, 9 d'introduction.

Dans un dispositif 1 anti-condensation selon l'invention, le dispositif 10 de chauffage s'étend sur chaque conduit 8, 9 d'introduction à proximité des organes 6, 7 de prélèvement et en aval de ceux-ci.

Le dispositif 1 anti-condensation d'un aéronef 13 représenté en figure 2 comprend en outre un organe 14 de mélange d'air (« Mixing unit ») comprenant au moins une entrée 15, 15' du flux d'air produit par les dispositif(s) 2, 3 de refroidissement et une entrée, dite entrée 16 d'air de recirculation, d'air adaptée pour permettre la recirculation de l'air humide et tempéré prélevé dans la cabine 17 de l'aéronef 13. L'organe 14 de mélange d'air comprend aussi au moins une sortie 18 d'air, dit air de sortie, obtenu par mélange du flux d'air sec et froid produit par les dispositif(s) 2, 3 de refroidissement et par l'air de recirculation. La sortie 18 d'air de l'organe 14 de mélange d'air est en communication de fluide avec un réseau 20 de distribution d'air conditionné dans la cabine 17 de l'aéronef 13, ledit réseau 20 étant adapté pour pouvoir permettre le mélange de l'air de sortie de l'organe 14 avec de l'air, dit air de trim, chaud et humide prélevé au niveau des compresseurs des moteurs de l'aéronef 13 et apporté au moyen d'un adducteur 40.

Dans une première variante selon l'invention représentée en figure 3, un dispositif 1 anti-condensation d'un aéronef 13 comprend, s'étendant en amont de l'organe 14 de mélange d'air (« Mixing unit »), au moins une unité 21 de pré-mélange, comprenant au moins deux entrées 15, 15' du flux d'air produit par les dispositif(s) 2, 3 de refroidissement dans l'unité 21 de pré-mélange, une sortie 25 d'air de cabine de l'unité 21 de pré-mélange en communication de fluide avec l'organe 14 de mélange et une sortie 22 d'air de déshumidification de ladite unité 21 de pré-mélange vers un échangeur 23 thermique.

En variante non représentée, un dispositif selon l'invention comprend en outre, s'étendant entre la sortie 22 d'air de déshumidification de l'unité 21 de pré-mélange et l'échangeur 23 thermique, un organe 38 d'extraction d'eau liquide de la partie du flux d'air produit par les dispositif(s) 2, 3 de refroidissement. Un tel organe 38 est adapté pour extraire l'eau liquide de la partie du flux d'air produit par les dispositif(s) 2, 3 de refroidissement et pour assécher l'espace 19 couronne.

La sortie 22 d'air de déshumidification de l'unité 21 de pré-mélange est en communication de fluide avec l'échangeur 23 thermique étant adapté pour permettre un échange thermique entre la partie du flux d'air sec et froid en sortie de l'unité 21 de pré-mélange et l'air de recirculation, tempéré et humide, préalablement à l'entrée de l'air de recirculation par l'entrée 16 d'air de recirculation dans l'organe 14 de mélange d'air (« Mixing unit »). Dans une telle variante d'un dispositif selon l'invention, le flux d'air de déshumidification en sortie 22 de l'unité 21 de pré-mélange ne rentre pas en contact avec l'air de recirculation. Un dispositif 1 anti-condensation selon cette première variante de l'invention comprend aussi en amont de l'échangeur 23 thermique, un dispositif 10 de chauffage s'étendant en amont sur le réseau 11 d'acheminement de la partie du flux d'air sec et froid.

### EXEMPLE 1 - Dispositif anti-condensation à chauffage électrique et en mode de fonctionnement « en vol »

Dans un dispositif de traitement d'air de l'état de la technique -par exemple, un dispositif d'Airbus A320 en vol- les deux dispositifs de refroidissement d'air délivrent dans l'organe de mélange (« mixing unit ») chacun un flux d'air à une température de l'ordre de +3°C et dont le débit est de l'ordre de 500 g/s. Cet air froid présente un taux de vapeur d'eau de l'ordre de 1 g/kg et un taux d'eau liquide sensiblement nul.

Dans un dispositif anti-condensation selon l'invention, le débit du flux d'air sec et froid issu de chaque dispositif de refroidissement d'air en entrée de l'organe de mélange est de 465 g/s. Aux fins de compenser la perte de débit d'air sec et froid (de 500 g/s à 465 g/s), les dispositifs de refroidissement produisent un flux d'air sec et froid à une température de -0,1 °C. Il est à noter que selon les spécifications des dispositifs de refroidissement d'air d'un Airbus A320, leur fonctionnement est optimal pour une production d'air à la température de -2,5°C. Le prélèvement de cette partie du flux d'air sec et froid n'a donc aucun impact sur la température de cabine.

Le flux d'air sec et froid est mélangé dans l'organe de mélange avec un flux d'air de recirculation à une température de +24°C, présentant un taux de vapeur d'eau de l'ordre de 2,6 g/kg, un taux d'eau liquide sensiblement nul et un débit de l'ordre de 600 g/s. En sortie de l'organe de mélange et après mélange avec l'air de trim, le flux d'air pour la cabine est à une température de +24°C, le taux de vapeur d'eau est de 2,6 g/kg et le taux d'eau liquide sensiblement nul. L'air destiné à être introduit dans la cabine « passagers » est obtenu par mélange du flux d'air sortant de la chambre de mélange avec l'air de trim. Cet air à destination de la cabine présente une température de +24°C, un taux de vapeur d'eau compris entre 1 et 2,6 g/kg et un taux d'eau liquide sensiblement nul.

Dans un dispositif anti-condensation selon l'invention évoluant en condition « de vol », le débit de la partie du flux d'air sec et froid est de 35 g/s dans chaque conduit d'introduction et de 70 g/s dans le tronc commun. Le dispositif de chauffage est un dispositif à résistance électrique dont la puissance est de 2,5 kW. Il permet de chauffer et augmenter la température de la partie du flux d'air sec et froid d'une valeur initiale de -0,1°C à une valeur finale de +35°C. Le flux d'air chaud et sec délivré en sortie du dispositif à résistance électrique et dans l'espace périphérique de l'aéronef présente un taux de vapeur d'eau de 1 g/kg et un taux d'eau liquide sensiblement nul. Le mélange de ce flux d'air chaud et sec avec l'air de cabine dans l'espace périphérique conduit à la formation d'un flux d'air dont le taux de vapeur d'eau est compris entre 1 et 2,6 g/kg.

L'air de couronne introduit dans l'espace périphérique de l'aéronef est asséché à une valeur de 1 g/kg pour une puissance électrique de 2,5 kW.

### EXEMPLE 2 - Dispositif anti-condensation à chauffage électrique et en mode de fonctionnement « au sol ».

Dans un dispositif de traitement d'air de l'état de la technique chaque dispositif de refroidissement d'air délivre dans l'organe de mélange (« mixing unit ») un flux d'air sec et froid à une température de l'ordre de +3°C et dont le débit est de l'ordre de 500 g/s. L'air de ce flux d'air sec et froid présente un taux de vapeur d'eau de l'ordre de 3 g/kg et un taux d'eau liquide de l'ordre de 6 g/kg.

Dans un dispositif anti-condensation selon l'invention, le débit du flux d'air sec et froid issu de chaque dispositif de refroidissement en entrée de l'organe de mélange est de 465 g/s. Aux fins de compenser la perte de débit d'air sec et froid (de 500 g/s à 465 g/s), les dispositifs de refroidissement produisent un flux d'air sec et froid à une température de -2,3°C.

Le flux d'air sec et froid est mélangé dans l'organe de mélange avec un flux d'air de recirculation à une température de +24°C, présentant un taux de vapeur d'eau de l'ordre de 12,5 g/kg, un taux d'eau liquide sensiblement nul et un débit de l'ordre de 770 g/s. En sortie de l'organe de mélange et après mélange avec l'air de trim, le flux d'air destiné à être introduit dans la cabine passagers est à une température de +24,7°C, le taux de vapeur d'eau est de 12,5 g/kg et le taux d'eau liquide sensiblement nul.

Dans un dispositif selon l'invention, le débit de la partie du flux d'air sec et froid dans chaque conduit d'introduction est de 40 g/s et de 80 g/s dans le tronc commun. Le dispositif de chauffage est un dispositif à résistance électrique dont la puissance est de 4,5 W. Il permet de chauffer et augmenter la température de la partie du flux d'air sec et froid d'une valeur initiale de -2,3°C à une valeur finale de +35°C. Le flux d'air chaud et sec délivré en sortie du dispositif à résistance électrique dans l'espace périphérique de l'aéronef présente un taux de vapeur d'eau compris entre 9 et 12,5 g/kg et un taux d'eau liquide sensiblement nul.

L'air de couronne introduit dans l'espace périphérique de l'aéronef est asséché à une valeur comprise entre 9 et 12,5 g/kg pour une puissance électrique de 4,5 kW.

Dans cette variante de l'invention (chauffage électrique), l'air de couronne introduit dans l'espace périphérique de l'aéronef est asséché à une valeur inférieure à 3 % d'humidité en condition « de vol » et inférieure à 26 % d'humidité en condition « au sol ».

### EXEMPLE 3 - Dispositif anti-condensation à chauffage électrique et par échangeur thermique en mode de fonctionnement « en vol ».

Dans une variante d'un dispositif anti-condensation selon l'invention, chaque dispositif de refroidissement produit un flux d'air sec et froid dirigé vers une unité de pré-mélange en communication de fluide avec l'unité de mélange (« mixing unit »).

Les flux d'air sec et froid émis par chacun des dispositifs de refroidissement présentent une température de -0,1°C, un taux de vapeur d'eau de l'ordre de 1 g/kg et un taux d'eau liquide sensiblement nul et sont mélangés dans l'unité de pré-mélange. La partie du flux d'air sec et froid prélevée en amont de l'unité de pré-mélange est dirigée vers un échangeur thermique avec un débit sensiblement de l'ordre de 70 g/s en vue d'y être réchauffé. L'échange thermique est réalisé avec un flux d'air de recirculation (air de cabine) à une température de +24°C, présentant un taux de vapeur d'eau de l'ordre de 2,6 g/kg, un taux d'eau liquide sensiblement nul et un débit de l'ordre de 600 g/s.

L'air de recirculation est refroidi à une température de +21,4°C et est introduit dans l'unité de mélange du dispositif sans modification du taux de vapeur d'eau. La partie du flux d'air sec et froid est, en sortie de l'échangeur thermique, réchauffé à une température de +22,3°C et présente un taux de vapeur d'eau de l'ordre de 1 g/kg et un taux d'eau liquide sensiblement nul.

Cette partie du flux d'air chaud et sec sortant de l'échangeur thermique est dirigée orientée vers un dispositif de chauffage électrique dans lequel il est réchauffé jusqu'à une température de +35°C. La puissance électrique nécessaire pour ce réchauffement est de 1 kW.

Dans cette variante d'un dispositif en « configuration vol » selon l'invention, l'air de couronne introduit dans l'espace périphérique de l'aéronef est asséché à une valeur de 1 g/kg pour une puissance électrique de 1 kW.

### EXEMPLE 4 - Dispositif anti-condensation à chauffage électrique et par échangeur thermique en mode de fonctionnement « au sol ».

Dans une variante d'un dispositif anti-condensation selon l'invention adapté pour un fonctionnement « au sol », chaque dispositif de refroidissement émet un flux d'air sec et froid présentant une température de -2,3°C, un taux de vapeur d'eau de l'ordre de 3 g/kg et un taux d'eau liquide de l'ordre de 6 g/kg et un débit de l'ordre de 460 g/s dans l'unité de pré-mélange.

La partie du flux d'air sec et froid prélevée à partir de l'unité de pré-mélange est dirigée avec un débit sensiblement de l'ordre de 80 g/s vers un échangeur thermique en passant au travers d'un extracteur d'eau dans lequel le taux d'eau liquide de ladite partie du flux d'air sec et froid est ramenée de 6 g/kg à 3 g/kg. La partie du flux d'air sec et froid prélevée est mis en contact avec l'échangeur thermique en vue d'y être réchauffée. L'échange thermique est réalisé avec un flux d'air de recirculation (air de cabine) à une température de +24°C, présentant un taux de vapeur d'eau de l'ordre de 12,5 g/kg, un taux d'eau liquide sensiblement nul et un débit de l'ordre de 770 g/s. La température de l'air de recirculation en sortie de l'échangeur thermique est de +20,6°C pour un taux de vapeur d'eau de l'ordre de 12,5 g/kg, un taux d'eau liquide sensiblement nul.

La partie du flux d'air sec et froid en sortie de l'échangeur thermique et en entrée du dispositif de chauffage électrique présente une température de +22,2°C, un taux de taux de vapeur d'eau de l'ordre de 6 g/kg et un taux d'eau liquide sensiblement nul. L'énergie nécessaire pour réchauffer et augmenter la température de la partie du flux d'air sec et froid à une valeur de +35°C est de 1,3 kW.

Dans cette variante d'un dispositif en « configuration sol » selon l'invention, l'air de couronne introduit dans l'espace périphérique de l'aéronef est asséché de 12,5 g/kg à 6 g/kg pour une puissance électrique de 1,3 kW.

## Revendications

1. Procédé anti-condensation pour aéronef (13), ledit aéronef (13) comprenant :
- une cabine (17) adaptée pour pouvoir recevoir des passagers ;
- un fuselage (30) ;
- un espace, dit espace (19) couronne, s'étendant entre une paroi supérieure de la cabine (17) et une paroi du fuselage (30) ;
- un dispositif de conditionnement d'air adapté pour fournir dans la cabine (17) de l'air adapté au maintien de la sécurité et du confort des passagers ;
- le dispositif de conditionnement d'air comprenant au moins un dispositif (2, 3) de refroidissement d'un air à une température comprise entre +10°C et +60°C, ledit dispositif (2, 3) de refroidissement comprenant au moins une entrée d'air et au moins une sortie d'un flux d'air, dit air froid, présentant une température comprise entre -1°C et +5°C :
**caractérisé en ce que** :
∘ on prélève au moins une partie du flux d'air froid, puis ;
∘ on réalise une étape de chauffage de ladite partie du flux d'air froid de façon à former un flux d'air, dit air chaud, à une température comprise entre +10° et +60°C, puis ;
∘ on introduit le flux d'air chaud dans l'espace (19) couronne de l'aéronef (13).

2. Procédé selon la revendication 1, **caractérisé en ce qu'**on réalise ladite étape de chauffage en utilisant un organe de chauffage choisi dans le groupe formé des organes de chauffage à résistance électrique, des organes de chauffage par échange thermique.

3. Procédé selon l'une des revendications 1 ou 2, **caractérisé en ce que** pour réaliser ladite étape de chauffage, on utilise des moyens de chauffage de ladite partie du flux d'air froid par échange thermique à partir d'au moins une source de chaleur de l'aéronef (13).

4. Procédé selon la revendication 3, **caractérisé en ce qu'**on choisit la(les) source(s) de chaleur de l'aéronef (13) dans le groupe formé des échangeurs thermiques primaires en zone non pressurisée, des échangeurs thermiques secondaires, des lignes de recirculation en zone pressurisée, des lignes d'extraction avionique et des parties chaudes des boucles liquides de l'aéronef (13).

5. Dispositif (1) anti-condensation pour aéronef (13), comprenant :
- une cabine (17) adaptée pour pouvoir recevoir des passagers ;
- un fuselage (30) ;
- un espace, dit espace (19) couronne, s'étendant entre une paroi supérieure de la cabine (17) et une paroi du fuselage (30) ;
- un dispositif de conditionnement d'air adapté pour fournir, dans la cabine (17) dudit aéronef, de l'air adapté au maintien de la sécurité et du confort des passagers ;
- le dispositif de conditionnement comprenant au moins un dispositif (2, 3) de refroidissement d'un air à une température comprise entre +10°C et +60°C, ledit dispositif de refroidissement comprenant au moins une entrée d'air à une température comprise entre +10°C et +60°C et au moins une sortie d'un flux d'air, dit air froid, présentant une température comprise entre -1°C et +5°C ;
**caractérisé en ce que** le dispositif (1) anti-condensation comprend un dispositif (10) de chauffage d'une partie du flux d'air froid, ledit dispositif (10) de chauffage s'étendant sur au moins un conduit (8, 9) d'introduction de la partie de flux d'air froid dans l'espace (19) couronne pour délivrer un flux d'air chaud dans l'espace (19) couronne de l'aéronef (13).

6. Dispositif selon la revendication 5, **caractérisé en ce qu'**il comprend un organe (38) d'extraction d'eau adapté pour retenir l'eau liquide de la partie du flux d'air froid et pour délivrer dans l'espace (19) couronne une partie du flux d'air froid sensiblement exempte d'eau liquide.

7. Dispositif selon l'une des revendications 5 ou 6, **caractérisé en ce que** le dispositif (10) de chauffage de la partie du flux d'air froid comprend un organe (35) de chauffage par résistance électrique.

8. Dispositif selon l'une des revendications 5 à 7, **caractérisé en ce que** le dispositif (10) de chauffage de la partie du flux d'air froid comprend un organe (37) de chauffage de la partie du flux d'air froid par échange thermique.

9. Dispositif selon la revendication 8, **caractérisé en ce que** l'organe (35) de chauffage par résistance électrique présente une consommation comprise entre 1,5 kW et 4,0 kW.

10. Dispositif selon l'une des revendications 5 à 9, **caractérisé en ce qu'**il comprend un organe (33, 34) de régulation de débit de la partie de flux d'air froid dans chaque conduit (8, 9) d'introduction.

11. Dispositif selon l'une des revendications 5 à 10, **caractérisé en ce que** chaque conduit de transfert du flux d'air chaud dans l'espace (19) couronne comprend un organe de régulation de débit de la partie de flux d'air chaud dans chaque conduit de transfert.

12. Dispositif selon l'une des revendications 10 ou 11, **caractérisé en ce que** l'organe (33, 34) de régulation de débit du flux d'air froid est une vanne (33, 34).

13. Utilisation d'un dispositif anti-condensation selon l'une des revendications 5 à 12 embarqué dans un aéronef (13).

14. Aéronef (13) équipé d'un dispositif anti-condensation selon l'une des revendications 5 à 12.

## Patentansprüche

1. Antikondensierungsverfahren für ein Luftfahrzeug (13), wobei das besagte Luftfahrzeug (13) folgendes umfasst:
- eine Kabine (17), die ausgeführt ist, um Passagiere aufnehmen zu können;
- einen Rumpf (30);
- einen Raum, der Ringraum (19) genannt wird, der sich zwischen einer oberen Wand der Kabine (17) und einer Wand des Rumpfes (30) erstreckt;
- eine Klimatisierungsvorrichtung, die ausgeführt ist, um die Kabine (17) mit Luft zu versorgen, die sich zur Aufrechterhaltung der Sicherheit und des Komforts der Passagiere eignet;
- wobei die Klimatisierungsvorrichtung zumindest eine Vorrichtung (2, 3) zum Kühlen einer Luft auf eine Temperatur zwischen +10°C und +60°C umfasst, wobei die besagte Vorrichtung (2, 3) zum Kühlen zumindest einen Lufteinlass und zumindest einen Auslass für eine Luftströmung, die Kaltluft genannt wird, umfasst, und eine Temperatur zwischen -1°C und +5°C aufweist:
**dadurch gekennzeichnet, dass**:
-- man zumindest einen Teil der Kaltluftströmung entnimmt, danach;
-- einen Schritt zum Heizen des besagten Teils der Kaltluftströmung durchführt, um eine Luftströmung zu bilden, die Warmluft genannt wird, und eine Temperatur zwischen +10°C und +60°C aufweist, und man danach;
-- die Warmluftströmung in den Ringraum (19) des Luftfahrzeugs (13) einführt.

2. Verfahren nach Anspruch 1, **dadurch gekennzeichnet, dass** man den besagten Heizschritt ausführt, indem man ein Heizelement verwendet, das aus einer Gruppe ausgewählt wird, die aus Heizelementen mit elektrischem Widerstand und Heizelementen mittels Wärmetausch besteht.

3. Verfahren nach einem der Ansprüche 1 oder 2, **dadurch gekennzeichnet, dass** man zur Ausführung des besagten Heizschrittes Heizmittel des besagten Teils der Kaltluftströmung mittels Wärmetausch ausgehend von zumindest einer Wärmequelle des Luftfahrzeugs (13) verwendet.

4. Verfahren nach Anspruch 3, **dadurch gekennzeichnet, dass** man die Wärmequelle(n) des Luftfahrzeugs (13) aus einer Gruppe auswählt, die durch Primärwärmetauscher in der nicht mit Druck beaufschlagten Zone, Sekundärwärmetauscher, Umlaufleitungen in der mit Druck beaufschlagten Zone, Avionikaustragsleitungen, und den warmen Teilen der Flüssigkeitsschleifen des Luftfahrzeugs (13) gebildet wird.

5. Antikondensierungsvorrichtung (1) für ein Luftfahrzeug (13), folgendes umfassend:
- eine Kabine (17), die ausgeführt ist, um Passagiere aufnehmen zu können;
- einen Rumpf (30);
- einen Raum, der Ringraum (19) genannt wird, der sich zwischen einer oberen Wand der Kabine (17) und einer Wand des Rumpfes (30) erstreckt;
- eine Klimatisierungsvorrichtung, die ausgeführt ist, um die Kabine (17) des besagten Luftfahrzeugs mit Luft zu versorgen, die sich zur Aufrechterhaltung der Sicherheit und des Komforts der Passagiere eignet;
- wobei die Klimatisierungsvorrichtung zumindest eine Vorrichtung (2, 3) zum Kühlen einer Luft auf eine Temperatur zwischen +10°C und +60°C umfasst, wobei die besagte Vorrichtung zum Kühlen zumindest einen Lufteinlass auf einer Temperatur zwischen +10°C und +60°C, und zumindest einen Auslass für eine Luftströmung, die Kaltluft genannt wird, umfasst, und eine Temperatur zwischen -1°C und +5°C aufweist;
**dadurch gekennzeichnet, dass** die Antikondensierungsvorrichtung (1) eine Vorrichtung (10) zum Heizen eines Teils der Kaltluftströmung umfasst, wobei sich die besagte Vorrichtung (10) zum Heizen über zumindest eine Leitung (8, 9) zum Einführen des Teils der Kaltluftströmung in den Ringraum (19) erstreckt, um eine Warmluftströmung in den Ringraum (19) des Luftfahrzeugs (13) abzugeben.

6. Vorrichtung nach Anspruch 5, **dadurch gekennzeichnet, dass** sie ein Element (38) zum Extrahieren von Wasser umfasst, das ausgeführt ist, um das flüssige Wasser aus dem Teil der Kaltluftströmung zurückzuhalten und um einen Teil der Kaltluftströmung in den Ringraum (19) abzugeben, der in etwa frei von flüssigem Wasser ist.

7. Vorrichtung nach einem der Ansprüche 5 oder 6, **dadurch gekennzeichnet, dass** die Vorrichtung (10) zum Heizen des Teils der Kaltluftströmung ein Element (35) zum Heizen mittels elektrischem Widerstand umfasst.

8. Vorrichtung nach einem der Ansprüche 5 bis 7, **dadurch gekennzeichnet, dass** die Vorrichtung (10) zum Heizen des Teils der Kaltluftströmung ein Element (37) zum Heizen des Teils der Kaltluftströmung mittels Wärmetausch umfasst.

9. Vorrichtung nach Anspruch 8, **dadurch gekennzeichnet, dass** das Element (35) zum Heizen mittels elektrischem Widerstand einen Verbrauch zwischen 1,5 kW und 4,0 kW aufweist.

10. Vorrichtung nach einem der Ansprüche 5 bis 9, **dadurch gekennzeichnet, dass** sie ein Element (33, 34) zum Regulieren des Durchflusses des Teils der Kaltluftströmung in jeder Einführungsleitung (8, 9) umfasst.

11. Vorrichtung nach einem der Ansprüche 5 bis 10, **dadurch gekennzeichnet, dass** jede Transferleitung der Warmluftströmung in den Ringraum (19) ein Element zum Regulieren des Durchflusses des Teils der Warmluftströmung in jeder Transferleitung umfasst.

12. Vorrichtung nach einem der Ansprüche 10 oder 11, **dadurch gekennzeichnet, dass** das Element (33, 34) zum Regulieren des Durchflusses des Teils der Kaltluftströmung ein Ventil (33, 34) ist.

13. Verwendung einer Antikondensierungsvorrichtung nach einem der Ansprüche 5 bis 12, die in einem Luftfahrzeug (13) eingebaut ist.

14. Luftfahrzeug (13), das mit einer Antikondensierungsvorrichtung nach einem der Ansprüche 5 bis 12 ausgestattet ist.

## Claims

1. An anti-condensation method for an aircraft (13), said aircraft (13) comprising:
- a cabin (17) adapted to be able to receive passengers;
- a fuselage (30);
- a space, named the crown (19), which extends between an upper wall of the cabin (17) and a wall of the fuselage (30);
- an air conditioning device adapted to supply the cabin (17) with air adapted to maintain the safety and comfort of the passengers;
- the air conditioning device comprising at least one device (2, 3) for cooling air at a temperature of from +10°C to +60°C, said cooling device (2, 3) comprising at least one air inlet and at least one outlet for a stream of air, called cold air, having a temperature of from -1°C to +5°C;
**characterized in that**:
∘ at least part of the stream of cold air is withdrawn; and then
∘ a step is carried out in which said part of the stream of cold air is heated so as to form a stream of air, named hot air, at a temperature of from +10° to +60°C; and then
∘ the stream of hot air obtained is introduced into the crown (19) of the aircraft (13).

2. The method according to claim 1, **characterized in that** said heating step is carried out using a heating element chosen from the group formed by electric resistance heating elements, elements for heating by heat exchange.

3. The method according to either claim 1 or claim 2, **characterized in that**, in order to carry out said heating step, there are used means for heating said part of the stream of cold air by heat exchange using at least one heat source of the aircraft (13).

4. The method according to claim 3, **characterized in that** the heat source(s) of the aircraft (13) is/are chosen from the group formed by primary heat exchangers in the non-pressurized zone, secondary heat exchangers, recirculation lines in the pressurized zone, avionic extraction lines, and hot parts of the liquid loops of the aircraft (13).

5. An anti-condensation device (1) for an aircraft (13), comprising:
- a cabin (17) adapted to be able to receive passengers;
- a fuselage (30);
- a space, named the crown (19), which extends between an upper wall of the cabin (17) and a wall of the fuselage (30);
- an air conditioning device adapted to supply the cabin (17) of said aircraft with air adapted to maintain the safety and comfort of the passengers;
- the conditioning device comprising at least one device (2, 3) for cooling air at a temperature of from +10°C to +60°C, said cooling device comprising at least one inlet for air at a temperature of from +10°C to +60°C and at least one outlet for a stream of air, called cold air, having a temperature of from -1°C to +5°C;
**characterized in that** the anti-condensation device (1) comprises a device (10) for heating part of the stream of cold air, said heating device (10) extending over at least one duct (8, 9) for introduction of the part of the stream of cold air into the crown (19) to deliver a stream of hot air into the crown (19) of the aircraft (13).

6. The device according to claim 5, **characterized in that** it comprises a water extraction element (38) adapted to retain the liquid water of the part of the stream of cold air and to deliver into the crown (19) part of the stream of cold air substantially free of liquid water.

7. The device according to either claim 5 or claim 6, **characterized in that** the device (10) for heating the part of the stream of cold air comprises an electric resistance heating element (35).

8. The device according to any one of claims 5 to 7, **characterized in that** the device (10) for heating the part of the stream of cold air comprises an element (37) for heating the part of the stream of cold air by heat exchange.

9. The device according to claim 8, **characterized in that** the electric resistance heating element (35) has a consumption of from 1.5 kW to 4.0 kW.

10. The device according to any one of claims 5 to 9, **characterized in that** it comprises an element (33, 34) for regulating the flow rate of the part of the stream of cold air in each introduction duct (8, 9).

11. The device according to any one of claims 5 to 10, **characterized in that** each duct for transfer of the stream of hot air into the crown (19) comprises an element for regulating the flow rate of the part of the stream of hot air in each transfer duct.

12. The device according to either claim 10 or claim 11, **characterized in that** the element (33, 34) for regulating the flow rate of the stream of cold air is a valve (33, 34).

13. The use of an anti-condensation device according to any one of claims 5 to 12 on board an aircraft (13).

14. An aircraft (13) equipped with an anti-condensation device according to any one of claims 5 to 12.
